# EUROPEAN PATENT APPLICATION

(11) **EP 2 341 274 A1**
(43) Date of publication of application: **06.07.2011**
(21) Application number: 10197450.9
(22) Date of filing: 31.12.2010
(51) Int. Cl.: F16L 55/165

(54) **Pipe puller**

(30) Priority: 31.12.2009 NL 2004039; 30.12.2010 NL 2005942
(71) Applicant: VISSER & SMIT HANAB B.V., 3356 LJ Papendrecht (NL)
(72) Inventor: Trip, Jan Harm Lute, 3356 LJ Papendrecht (NL)
(74) Representative: Assendelft, Jacobus H.W.

(57) **Abstract**

Pipe puller having: a vertical extending frame (7) with at its lower side a substantially vertical bearing face (4) with an opening for passage of the cable (8) and remote from the lower side an electrical motor winch (5) with a winch drum; a pulling cable provided with anchoring means to anchor to a buried pipe; a guide wheel (3) for the cable; a splitter (2) to continuously longitudinally split the pipe while it is puller out of the ground.

## Description

This invention relates to a pipe puller to pull a buried horizontal pipe out of the ground by longitudinally displacement of it.

GB2270963, NL1000664 (Visser & Smit Hanab) and NL1006932 (J & D Leidingsystemen) each disclose a pipe puller. For elaborated technical background reference is made to these disclosures. With the pipe puller according to NL1000664, which lacks a driven winch drum, hydraulic pistons intermittently extend and retract the frame while the pipe is pulled out of the ground, which movement generates the pulling movement. With the pipe puller of NL1006932, which is provided with a driven winch drum, the frame can not extend and retract and the driving of the winch drum provides all energy to pull the pipe out of the ground.

This invention mainly improves the pipe puller of NL1006932. Important design requirement of a pipe puller are robustness, long life, maintenance free, compact, light weight, safe, sufficient accessible in the light of the limited available space in the hole in the ground in which the pipe puller is located, limited dimension of the required hole in the ground and the free space around it (the work is often carried out in a show garden which must be saved as much as possible). These design requirements put high demands to the motor winch which must be as light, powerful, small and reliable as possible. The object of the invention is an improved pipe puller with which, while maintaining or even improving the life of the pulling cable, can pull a longer pipe out of the ground in a single action.

The pipe puller according the invention comprises, as viewed in its operating position: a vertical extending frame with at its lower side a substantially vertical bearing face with an opening for passage of the cable and remote from the lower side an electrical motor winch with a winch drum; a partly onto the winch drum wound pulling cable provided with anchoring means to anchor the cable to a buried pipe to be removed; a below the motor winch, at the level of the vertical bearing face, rotatable to the frame mounted guide wheel for the cable; along the by the cable followed track between the motor winch and the guide wheel a splitter to continuously longitudinally split the pipe while it is puller out of the ground such that before the cable is wound onto the winch drum, it can be freed from the part of the pipe which is pulled out of the ground. Further the pipe puller comprises along the track followed by the cable between the winch drum and the guide wheel, preferably between winch drum and splitter, a cable disc which is freely rotatable mounted onto a to the frame mounted and parallel to the rotation axis of the winch drum extending cable disc shaft and which is preferably free movable along this cable disc shaft over a distance which is preferably substantially equal to and completely overlaps with the operating width of the winch drum. Winch drum and cable disc are preferably mutually mounted such that the from the cable disc to the winch drum extending part of the cable makes an angle with the from the cable disc to the guide wheel extending part of the cable, which angle is preferably between 90 and 180 degrees. The from the cable disc to the guide wheel extending part of the cable preferably extends vertical.

In the presently most preferred embodiment the winch drum is located at the side of the frame facing in the direction from which the out of the ground pulled pipe comes, such that the cable, viewed from the side of the pipe puller, follows a track from the winch drum to within the buried pipe just beyond the guide wheel, which is substantially comparable with the shape of a laying U of which the one leg points towards the winch drum and the other projects into the buried pipe.

It was a surprise to learn that by adding the cable disc supporting the pulling cable from the guide wheel to the winch drum, the life of the pulling cable increases and simultaneously a longer pipe can be pulled out of the ground in a single action, even without the requirement to use a motor winch with increased power. The cable disc provides that during pulling a buried pipe out of the ground, the pulling cable obtains a fixed position relative to the splitter, which increases the reliability of the operation of the splitter.

The pipe puller comprises preferably one or more of the following: suspension means to suspend the frame relative to a bridge across the hole in the ground into which the frame is located; an e.g. V or U like circumferential groove in the guide wheel and/or cable disc to prevent that the pulling cable unintentionally slips from the wheel or disc; the splitter is designed like a knife with parallel to the rotation axis of the winch drum extending cutting edge, such that after passage of the guide wheel the pipe is peeled by the splitter such that the pipe wall is cut at two locations by the splitter such that the pipe is cut in two by the splitter; the distance between two or more of the winch drum, cable disc, splitter and guide wheel can vary or is constant, e.g. in that the frame has a variable or fixed, respectively, length, which aspect particularly is applicable to the indeed or not be able to adapt the frame and/or location of the parts at the frame along which the cable is guided, to level differences at which the buried pipes are within the ground; the frame has a fixed length and the parts at the frame along which the cable is guided have a fixed mutual location at least during each stage while a pipe is pulled out of the ground with the pipe puller, differently said, while pulling out the pipe no use is made of a movement of e.g. the frame such as indeed takes place with the pipe puller of NL1000664; the pipe puller is designed such that the drive of the winch drum needs to provide all energy to pull the pipe out the ground.

The invention also relates to a method to remove out of the ground a pipe with two free ends, the one of which debouches into a hole in the ground, and wherein the following steps are carried out: a pipe puller with rigid frame is located in the hole in the ground; the free cable end of a from the winch drum of the pipe puller unwound pulling cable is inserted into the one free end of the pipe and anchored to said pipe such that the pipe surrounds the cable end; the pulling cable is wound onto the winch drum such that the cable end with the pipe anchored to it is longitudinally of the pipe pulled out the ground; the out the ground pulled cable end with the pipe around it is guided along a guide wheel of the pipe puller such that by reaction a part of the to the cable end exerted pulling force is conveyed to the pipe; during pulling out the ground the pipe, surrounding the cable end, after passage of the guide wheel is continuously split and separated from the cable end; after passage of the guide wheel the cable end is guided along a cable disc of the pipe puller, and subsequently arrives at the winch drum.

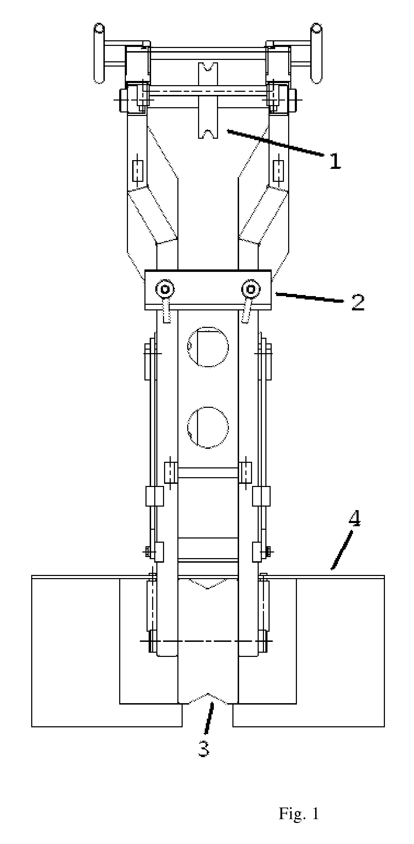

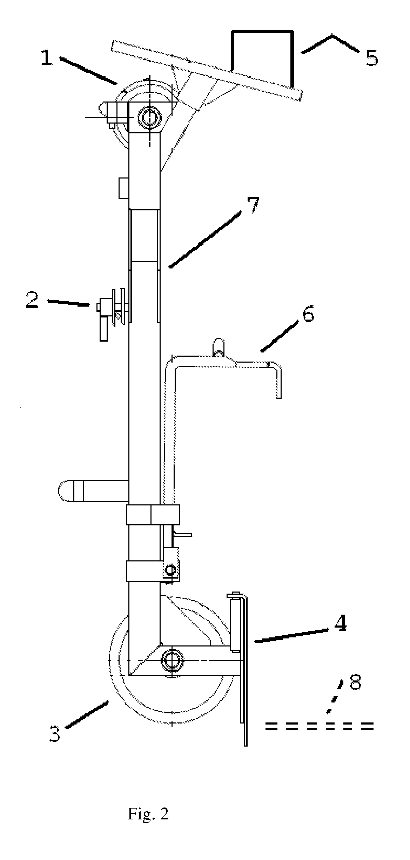

The invention is further illustrated by way of a presently preferred embodiment shown in the drawing. This pipe puller is based on the one shown in fig. 1 and 2 of NL1006932. For a disclosure of the pipe puller reference is made to NL1006932, in particular the text part which relates to fig. 1 and 2 of it. Now the differences are discussed of the pipe puller of the invention and the one shown in fig. 1 and 2 of NL1006932: the added cable disc and the changed location of the winch drum at the frame.

Enclosed fig. 1 schematically shows the pipe puller in front view.

Fig. 2 shows the pipe puller of fig. 1 in side view.

In fig. 1 the winch drum and motor winch are absent(in fig. 2 mutually referenced by number 5). The pipe puller has a rigid frame 7. The location is indicated of the with the pipe puller to be removed pipe 8 in the ground relative to the pipe puller. From the winch drum 5 the pulling cable (not shown) extends inclined downward to the cable disc 1 and from there vertical to the guide wheel 3. Between the disc 1 and the wheel 3 the cable passes the splitter 2. With the foot 4 during operation the pipe puller bears against the upright wall of the hole in the ground. With the suspension bracket 6 (suspension means) the frame 7 is suspended from a bridge across the hole in the ground into which the frame 7 is located.

The winch drum 5 is located at the side of the frame 7 facing in the direction from which the out of the ground to be pulled pipe 8 comes. Thus the pulling cable follows, viewed from the side at the pipe puller, a track from the winch drum 5 to the pipe 8 in the ground just beyond the guide wheel 3, substantially comparable to the shape of a lying U of which the one leg points to the winch drum 5 and the other projects into the pipe 8 in the ground.

## Claims

1. Pipe puller which, as viewed in its operating position comprises: a vertical extending frame (7) with at its lower side a substantially vertical bearing face (4) with an opening for passage of the cable (8) and remote from the lower side an electrical motor winch (5) with a winch drum; a partly onto the winch drum wound pulling cable provided with anchoring means to anchor the cable to a buried pipe to be removed; a below the motor winch, at the level of the vertical bearing face, rotatable to the frame mounted guide wheel (3) for the cable; along the by the cable followed track between the motor winch and the guide wheel a splitter (2) to continuously longitudinally split the pipe while it is puller out of the ground such that before the cable is wound onto the winch drum, it can be freed from the part of the pipe which is pulled out of the ground.

2. Device according to claim 1 with a cable disc (1) along the by the pulling cable followed track between the winch drum and the guide wheel, preferably between winch drum and splitter.

3. Device according to claim 2, which cable disc is freely rotatable mounted onto a to the frame mounted and parallel to the rotation axis of the winch drum extending cable disc shaft and which is preferably free movable along this cable disc shaft over a distance which is preferably substantially equal to and completely overlaps with the operating width of the winch drum.

4. Pipe puller according to claim 2 or 3, Winch drum and cable disc are mutually mounted such that the from the cable disc to the winch drum extending part of the cable makes an angle with the from the cable disc to the guide wheel extending part of the cable, which angle is preferably between 90 and 180 degrees and/or the from the cable disc to the guide wheel extending part of the cable preferably extends vertical.

5. Pipe puller according to any of claims 1-4, the winch drum is located at the side of the frame facing in the direction from which the out of the ground pulled pipe comes, such that the cable, viewed from the side of the pipe puller, follows a track from the winch drum to within the buried pipe just beyond the guide wheel, which is substantially comparable with the shape of a laying U of which the one leg points towards the winch drum and the other projects into the buried pipe.

6. Pipe puller according to any of claims 1-5, comprising one or more of the following: suspension means to suspend the frame relative to a bridge across the hole in the ground into which the frame is located; an e.g. V or U like circumferential groove in the guide wheel and/or cable disc to prevent that the pulling cable unintentionally slips from the wheel or disc; the splitter is designed like a knife with parallel to the rotation axis of the winch drum extending cutting edge, such that after passage of the guide wheel the pipe is peeled by the splitter such that the pipe wall is cut at two locations by the splitter such that the pipe is cut in two by the splitter; the distance between two or more of the winch drum, cable disc, splitter and guide wheel can vary or is constant, e.g. in that the frame has a variable or fixed, respectively, length, which aspect particularly is applicable to the indeed or not be able to adapt the frame and/or location of the parts at the frame along which the cable is guided, to level differences at which the buried pipes are within the ground; the frame has a fixed length and the parts at the frame along which the cable is guided have a fixed mutual location at least during each stage while a pipe is pulled out of the ground with the pipe puller, differently said, while pulling out the pipe no use is made of a movement of e.g. the frame such as indeed takes place with the pipe puller of NL1000664; the pipe puller is designed such that the drive of the winch drum needs to provide all energy to pull the pipe out the ground.

7. method to remove out of the ground a pipe with two free ends, the one of which debouches into a hole in the ground, and wherein the following steps are carried out: a pipe puller, e.g. according to any of claims 1-6, with rigid frame is located in the hole in the ground; the free cable end of a from the winch drum of the pipe puller unwound pulling cable is inserted into the one free end of the pipe and anchored to said pipe such that the pipe surrounds the cable end; the pulling cable is wound onto the winch drum such that the cable end with the pipe anchored to it is longitudinally of the pipe pulled out the ground; the out the ground pulled cable end with the pipe around it is guided along a guide wheel of the pipe puller such that by reaction a part of the to the cable end exerted pulling force is conveyed to the pipe; during pulling out the ground the pipe, surrounding the cable end, after passage of the guide wheel is continuously split and separated from the cable end; after passage of the guide wheel the cable end is guided along a cable disc of the pipe puller, and subsequently arrives at the winch drum.
